# EUROPEAN PATENT SPECIFICATION

(11) **EP 3 272 582 B1**
(45) Date of publication and mention of the grant of the patent: **13.11.2019**
(21) Application number: 17172130.1
(22) Date of filing: 22.05.2017
(51) Int. Cl.: B60P 7/08

(54) **ANCHORING DEVICE, PLATFORM AND RESPECTIVE ANCHORING SYSTEM FOR TRANSPORT VEHICLES**
VERANKERUNGSVORRICHTUNG, PLATTFORM UND ENTSPRECHENDES VERANKERUNGSSYSTEM FÜR TRANSPORTFAHRZEUGE
DISPOSITIF D'ANCRAGE, PLATE-FORME ET SYSTÈME D'ANCRAGE RESPECTIF POUR VÉHICULES DE TRANSPORT

(30) Priority: 20.07.2016 IT 201600076331
(43) Date of publication of application: 24.01.2018
(73) Proprietor: Fami S.R.L., 36027 Rosà (VI) (IT)
(72) Inventor: MILANI, LUCA, 36028 ROSSANO VITO VICENZA (IT)
(74) Representative: Paparo, Aldo

(56) References cited:
- US-A- 3 698 677
- US-A1- 2006 099 044
- US-A1- 2013 251 474
- US-B1- 6 503 036

## Description

The present invention relates to an anchoring system for transport vehicles which is compatible with all types of loading surfaces of transport vehicles and with the different hooking systems that the transport vehicle already has in the loading compartment.

In greater detail, an anchoring device and a platform equipped with a plurality of the aforesaid anchoring devices are also described so as to provide an anchoring system for transport vehicles configured for any type of hooking accessory, above all from an aftermarket source or specifically made for a special transport use.

In the prior art there are known hooking systems already set up by the vehicle manufacturer which must be used to secure objects and loads to be transported. See for example US 2013/251474 A1. An improper use of the hooking systems set up in the factory or incorrect transport of an object on a transport vehicle can have dangerous consequences and cause damage for which whoever is responsible may be subject to sanctions.

Generally, the hooking systems already present on the vehicle can have further hooking means associated with them, but these require the intervention of a specialised installer who can introduce additional hooking points based on existing setups (unequipped) on the vehicle, or else introduce an additional platform to be associated with the original loading surface of the vehicle and on which new additional attachment points can be introduced.

Generally, the installation operation is rather long, complicated and costly; however, having to give up a supplementary number of hooking points on the loading surface of the vehicle due to the lack of an additional platform could preclude the possibility of greater flexibility of the vehicle itself transporting goods and objects.

The object of the present invention is to solve the problems encountered in the prior art by proposing an anchoring system for transport vehicles which enables, for example, a greater ease of installation, above all in terms of times and costs.

A further object of the present invention is to provide an anchoring system for transport vehicles characterised by a greater flexibility of use compared to known systems/fittings for transport vehicles.

The dependent claims correspond to possible embodiments of the invention.

The description is provided with reference to the accompanying figures, which are likewise provided by way of illustrative and thus non-limiting example, in which:
- Figure 1A is a schematic perspective view of one embodiment of an anchoring device according to the present invention;
- Figure 1B is a further schematic perspective view of the anchoring device of Figure 1A;
- Figure 2A is a schematic perspective view of a different embodiment of an anchoring device according to the present invention;
- Figure 2B is a further schematic perspective view of an anchoring device of Figure 2A;
- Figure 3 is a schematic perspective view of an anchoring device of Figures 2A-2B installed on a platform and complete with a hook or anchoring ring according to the present invention;
- Figure 4 is a schematic perspective view of a platform complete with several anchoring elements according to the present invention;
- Figure 5 is an exploded schematic view of a plurality of platforms like the one in Figure 4 installed on a loading surface of a transport vehicle according to the present invention;
- Figure 6A is a schematic sectional view of the anchoring system in one embodiment according to the present invention installed on a loading surface of a vehicle;
- Figure 6B is a schematic sectional view of the anchoring system in a different embodiment according to the present invention installed on a loading surface of a vehicle.

The present invention, as mentioned above, relates to an anchoring system 30 for transport vehicles 100 comprising an anchoring device 10 and a platform 20.

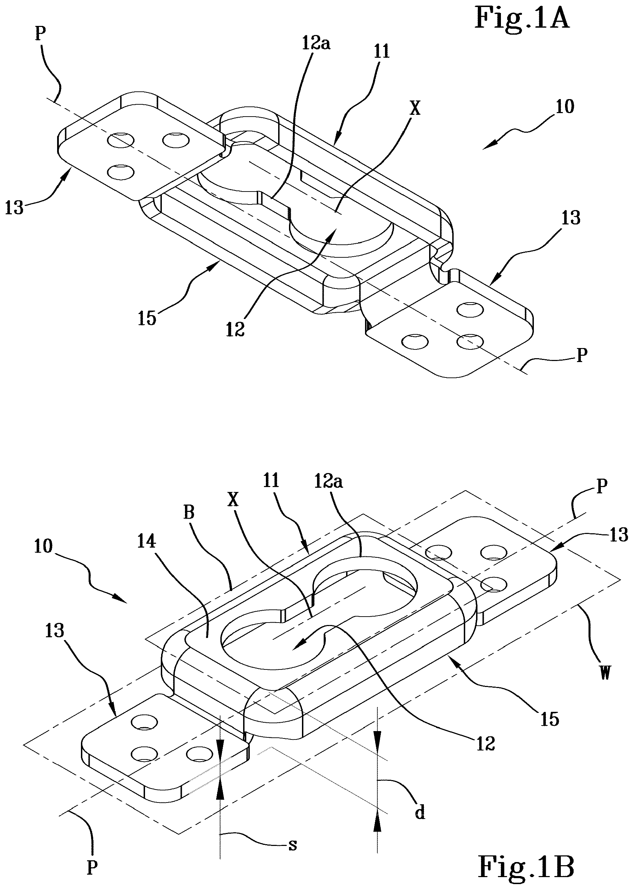

In reference to the appended Figures 1A-2B, they schematically illustrate two variants of the anchoring device 10 according to the present invention, wherein the anchoring device 10 is fixable to the platform 20, which is in turn installable on a loading surface 110 of a transport vehicle 100 having a predetermined corrugated profile.

The corrugated or undulating profile of the loading surface 110 is generally a known solution widely used on transport vehicles 100 to lend robustness and at the same time to enable fixing positions to be provided for the objects to be transported.

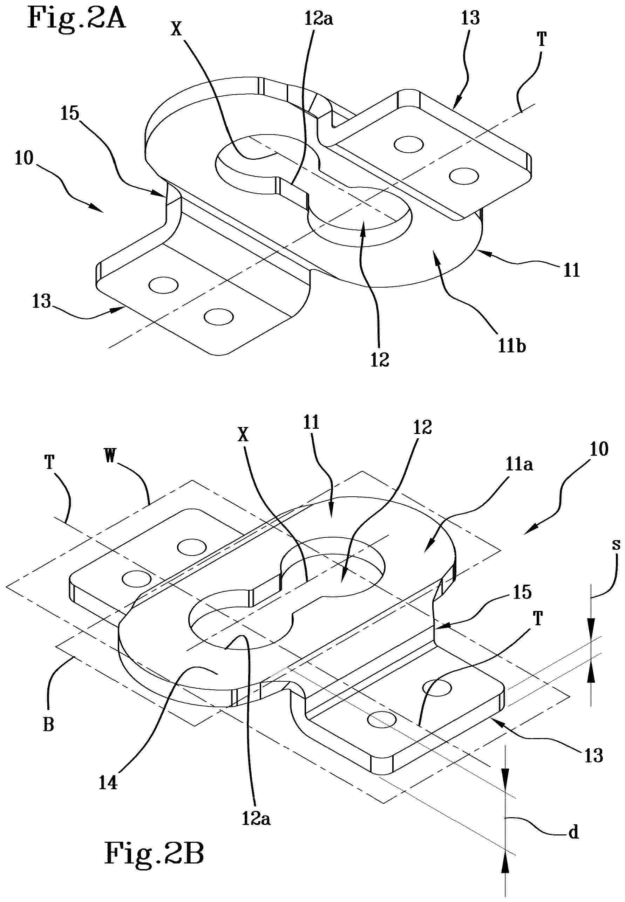

The figures illustrate the anchoring device 10 from a bottom (Figures 1A and 2A) and top (Figures 1B and 2B) perspective view so as to better highlight the structural features without intending, however, to limit dimensions or geometric and dimensional relations solely to the illustrated variants.

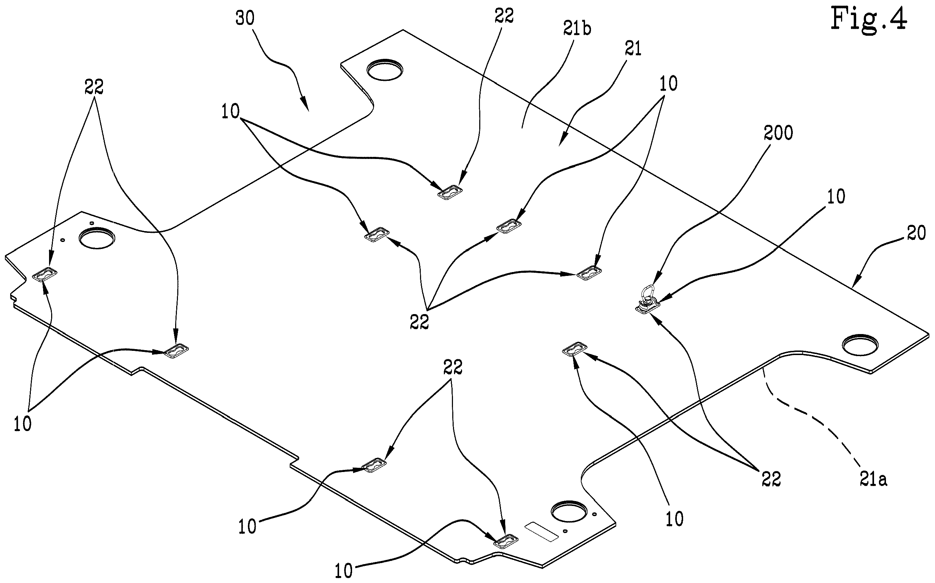

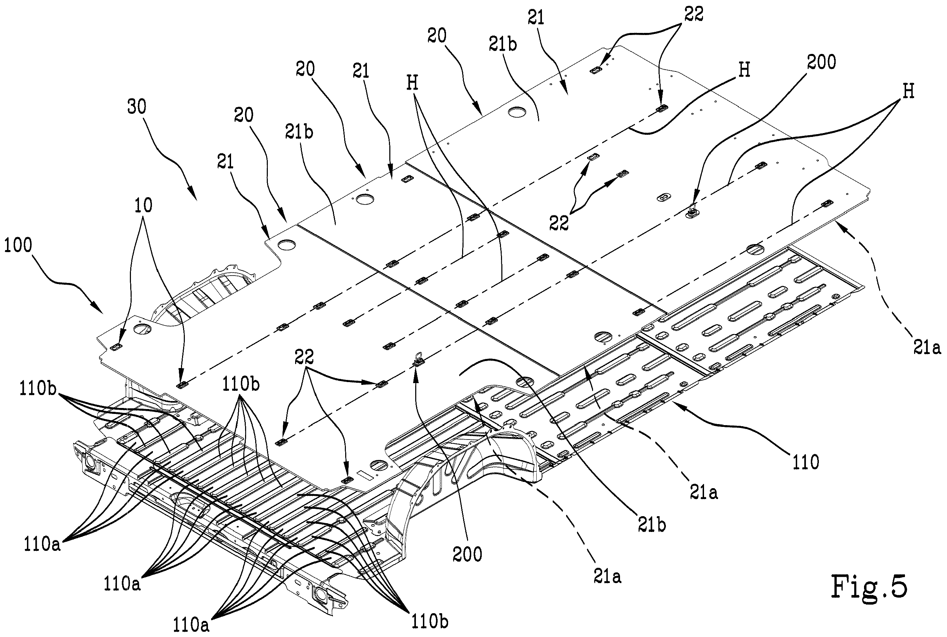

In greater detail, the anchoring device 10 for transport vehicles 100 comprises a main body 11 having at least one shaped opening 12 whereby it is possible to associate a hook or anchoring ring 200 to which an object to be transported on a vehicle 100 can be fixed (as illustrated by way of non-limiting example in the appended Figures 4 and 5).

The anchoring device 10 further comprises at least two finned portions 13 solidly constrained with the main body 11 and configured to make said anchoring device 10 fixable to a structure of the transport vehicle 100.

By means of the aforesaid finned portions 13, the anchoring device can be fixed to the platform 20 installable on the structure of the transport vehicle 100 defined by a loading surface 110.

Again by means of the aforesaid finned portions 13, the anchoring device 10 can be fixed to the structure of the transport vehicle 100 defined by a vertical wall of the loading compartment or to a panelling applied thereto. Hereinafter in the description, the definition of loading surface will make reference without distinction to a horizontal or a vertical surface.

The opening 12 on the main body 11 exhibits a main direction of extension "X", preferably longitudinal.

Preferably, the main body 11 of the anchoring device 10 also extends along the aforesaid main direction of extension "X". In other words, both the main body 11 and the opening 12 share the same direction of extension, which coincides with the main direction of extension "X". Preferably, the opening 12 is symmetrical relative to the main direction of extension "X".

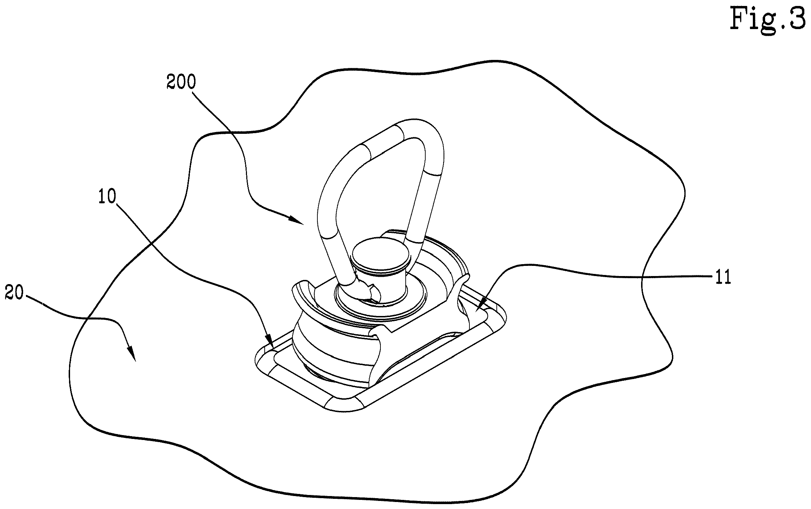

Preferably, the opening 12 is configured to enable a disassembly/assembly of a hook or anchoring ring 200 by acting along a working direction parallel, for example, to the main direction of extension "X" of the opening 12 itself. The hook or anchoring ring 200 is not part of the present invention; however, by way of example it has been schematically illustrated in the appended Figures 3-5.

In reference now to the main body 11, the main body 11 of the anchoring device 10 preferably has a flat surface 14, which the opening 12 passes through on a front face 11a, and a curved perimeter edge 15 on a rear face 11b of the main body 11. By way of example, the curved perimeter edge 15 can be the joining portion between the main body 11 itself and the finned portions 13 of the anchoring device 10, as illustrated in the appended Figures 2A and 2B.

In a different example case, the curved perimeter edge 15 extends along the whole perimeter of the main body 11 so as to define a plan shape at least of the flat surface 14 of the main body 11, as illustrated by way of example in the appended Figures 1A and 1B.

By way of example, the flat surface 14 of the main body 11 can have a quadrangular shape with rounded corners or else a shape with two semicircular ends joined by a central rectilinear portion. According to the invention, the smaller dimension of the flat surface 14 is preferably orthogonal to the main direction of extension "X" of the opening 12. Preferably, as illustrated by way of example in the appended figures, the opening 12 of the main body 11 is defined by an edge 12a having two widened end portions and a central narrowed portion, wherein the widened portions are circular and joined together by means of the central narrowed portion.

According to the invention, the finned portions 13 are such as to extend laterally with respect to the main body 11 along a transverse direction "T" or a parallel direction "P" relative to the main direction of extension "X" of the opening 12 and of the main body 11.

In one embodiment of the anchoring device 10, the finned portions 13 are preferably such as to extend laterally with respect to the main body 11 along a parallel direction "P" relative to the main direction of extension "X" of the opening 12 and of the main body 11, as illustrated by way of example in Figures 1A and 1B.

Even more preferably, the parallel direction "P" of extension of the finned portions 13 coincides with the main direction of extension "X" of the opening 12.

In the embodiment of the anchoring device 10 described hereinabove, the finned portions 13 are arranged respectively on opposite sides of the main body 11 and along the main direction of extension "X".

In a different embodiment of the anchoring device 10, the finned portions 13 are preferably such as to extend laterally with respect to the main body 11 along a direction "T" perpendicular to the main direction of extension "X" of the opening 12 and of the main body 11, as illustrated by way of example in Figures 2A and 2B.

In the embodiment of the anchoring device 10 described hereinabove, the finned portions 13 are arranged respectively on opposite sides of the main body 11 relative to the main direction of extension "X"; preferably, the finned portions 13 are arranged at a median point of the opening 12.

Preferably, the finned portions 13 have a width less than or equal to that of a side edge of the main body 11 wherefrom they extend, both along the parallel direction "P" and along the perpendicular direction "T", relative to the main direction of extension "X" of the main body 11. In other words, according to the invention, the finned portions 13 are never wider than the maximum dimensions of the main body 11 wherefrom they extend. According to the invention, the main body 11 lies in a respective lying plane "B" and the finned portions lie in a respective lying plane "W", as can be appreciated in the appended Figures 1B and 2B.

According to the invention, the lying plane "B" of the main body 11 and the lying plane "W" of the finned portions 13 are offset from one another and arranged at a predetermined distance "d".

Preferably, the distance "d" between the lying plane "B" of the main body 11 and the lying plane "W" of the finned portions 13 has a value comprised between approximately 2 mm and approximately 18 mm. Even more preferably, the distance "d" between the lying plane "B" of the main body 11 and the lying plane "W" of the finned portions 13 has a value comprised between approximately 6 mm and 18 mm.

The finned portions 13 have through holes so as to enable the anchoring device 10 to be fixed to a structure of the transport vehicle 100 and/or to the platform 20 installable on the loading surface 110 of a transport vehicle 100.

According to the invention, in reference to the appended Figures 4 and 5, there is described a platform 20 installable on a loading surface 110 of a transport vehicle 100, wherein the loading surface 110 has a predetermined corrugated profile.

The platform 20 comprises a sheet-like element 21 exhibiting a plurality of holes 22 such as to put in communication a side 21a with an opposite side 21b of the sheet-like element 21.

Preferably, in a configuration of the platform 20 installed on the loading surface 110 of the transport vehicle 100, the holes 22 of the platform 20 are arranged in sequence at a recessed portion 110a of the corrugated profile of the loading surface 110 and the platform 20 is resting on the loading surface 110 at a raised portion 110b of the corrugated profile of the loading surface 110, as illustrated by way of non-limiting example in the appended Figure 5.

In particular, the holes 22 are made by cutting the sheet-like element 21 straight from the side 21a to the opposite side 21b along a direction perpendicular to an ideal lying plane of the sheet-like element 21. Advantageously, the arrangement of the holes 22 on the sheet-like element 21 of the platform 20 does not exhibit housings and/or any narrowing in shape; in particular, the perforation/shape of each hole 22 is obtained, for example, through the use of a pantograph machine tool or the like.

In other words, the platform 20 according to the present description requires modest manufacturing times and simple operations that may be performed using unsophisticated machine tools, because the holes 22 do not exhibit any bottom planes or abutment edges for accommodating the anchoring devices 10, as are known, by contrast, in traditional platforms for transport vehicles.

Preferably, the holes 22 are arranged in sequence along mutually parallel directions "H" and have a shape such as to allow an anchoring device 10 to be housed in such a way that at least the flat surface 14 of each anchoring device 10 is flush with the opposite side 21b of the sheet-like element 21. In other words, once the anchoring devices 10 have been fixed to the platform 20, they will be such as to emerge flush with the opposite side 21b of the platform, the side on which the objects to be transported on the vehicle 100 will be positioned, and the side on which anchoring hooks 200 will be mounted if necessary to better secure the objects to be transported.

Preferably, the main direction of extension "X" of the opening 12 of each anchoring device 10 is parallel to the parallel directions "H" in which the holes 22 are arranged.

Preferably, in a minimal configuration of the platform, the holes 22 are arranged at fixed hooking points provided on a loading surface10 of a transport vehicle 100.

Preferably, in a configuration with greater flexibility of use of the platform, the holes 22 are fashioned on the loading surface 110 of the transport vehicle 100 in a number that depends on the user's needs and along directions not coinciding with those defined by the fixed hooking points.

In other words, in a minimal configuration the platform has a number of holes 22 equal to the fixed hooking points present on the loading surface whereas in a configuration with broader flexibility the number of holes 22 is greater than the number of fixed hooking points.

According to the present invention, there is defined, therefore, an anchoring system 30 for transport vehicles 100, comprising a plurality of anchoring devices 10, as described above, and a platform 20 installable on a loading surface 110 of a transport vehicle 100, as described above.

In the anchoring system 30, the anchoring devices 10 are reversibly fixed on the side 21a of the sheet-like element 21 via respective finned portions 13 and the anchoring devices 10 are such as to emerge flush from the respective holes 22 of the platform 20 with the respective flat surface 14 on the opposite side 21b of the sheet-like element 21, as illustrated by way of example in the appended Figure 5.

Preferably, a value of the thickness "S" of the finned portions 13 of the anchoring devices 10 is less than a minimum distance between a recessed portion 110a and a raised portion 110b of a corrugated profile of the loading surface 110 of the transport vehicle 100.

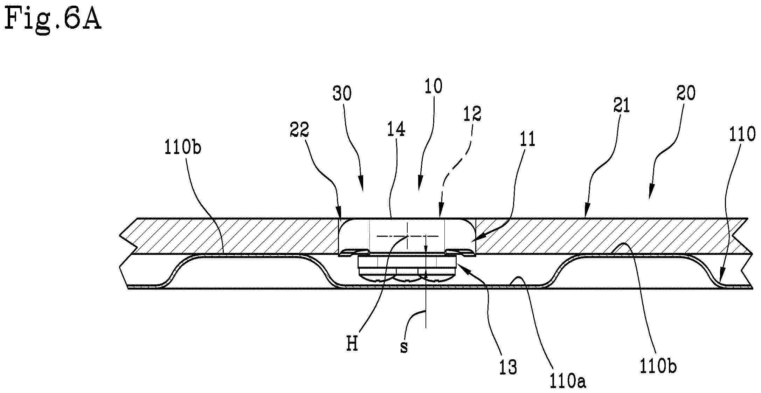

Said thickness value "S" is preferably comprised between 1 and 5 mm. In one embodiment of the anchoring system 30, in a configuration of the platform 20 installed on the loading surface 110, the anchoring devices 10 have respective finned portions 13 aligned along parallel directions "H" in which the holes 22 are arranged in such a manner that the main body 11 and the finned portions 13 are completely and simultaneously contained within the same recessed portion 110a of the corrugated profile of the loading surface 110. In other words, the platform 20, when it is arranged in abutment with the loading surface 110, is such as to have all of the anchoring devices 10 fixed to it inserted completely into the compartment or hollow formed between a recessed portion 110a and a raised portion 110b of the corrugated profile of the loading surface 110, as illustrated by way of example in the appended Figure 6A.

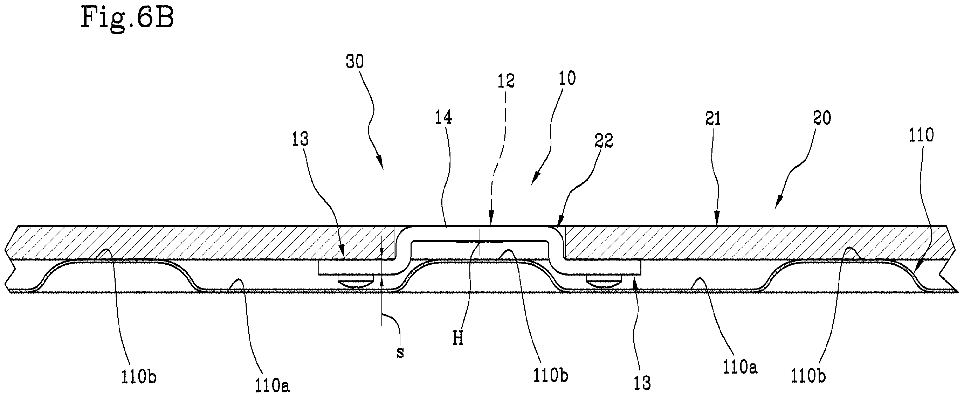

In a different embodiment of the anchoring system 30, in a configuration of the platform 20 installed on the loading surface 110, the anchoring devices 10 have respective finned portions 13 arranged transversely with respect to parallel directions "H" in which the holes 22 are arranged in such a manner that the main body 11 is arranged at a raised portion 110b of the corrugated profile and at the same time the finned portions 13 are arranged at respective recessed portions 110a of the corrugated profile of the loading surface 110 that are adjacent to the aforesaid raised portion 110b, as illustrated by way of example in the appended Figure 6B. In particular, in the anchoring system 30, the anchoring devices 10 exhibit respective finned portions 13 arranged perpendicularly with respect to the parallel directions "H" in which the holes 22 are arranged in such a manner that the main body 11 is arranged at a raised portion 110b of the corrugated profile and the finned portions 13 are arranged at respective recessed portions 110a of the corrugated profile that are adjacent to the above-mentioned raised portion 110b.

The anchoring system 30 comprises fixing means for fixing the anchoring devices 10 on the side 21a of the sheet-like element 21, at a hole 22, via respective finned portions 13, wherein the fixing means are preferably selected from one or more among: self-tapping screws, threaded screws, bolts and rivets.

The anchoring device 10 is preferably made by sheet metal forming.

The present invention has achieved the preset objects.

Advantageously, the anchoring system of the present invention is installable on every type of loading surface of a transport vehicle and requires just a few simple manual operations on the part of an installer. Advantageously, the platform of the present description can be made with just a few machine tool operations, which are such as to optimise the times and costs of manufacture. Moreover, the platform of the present description, with holes of only one shape distributed in an orderly manner according to the corrugated shape of the rest surface of a vehicle to be loaded, enables anchoring devices of different shapes and structures to be installed without any impediment and using simple tools.

Advantageously, the anchoring devices of the present description are configured in such a way as to accommodate every type of hook or anchoring ring, which are not part of the present description, in order to secure an object on the platform without creating any problem of compatibility between different anchoring products available on the market.

## Claims

1. An anchoring system (30) for transport vehicles (100), comprising:
- a plurality of anchoring devices (10) for transport vehicles (100) comprising:
- a main body (11) exhibiting at least one opening (12) through which a hook or anchoring ring (200) may be associated, which is fixable to an object to be transported on a vehicle (100);
- at least two finned portions (13) solidly constrained with said main body (11) and configured to make said anchoring device (10) fixable to a structure of a transport vehicle (100) and/or a surface (110) of a transport vehicle (100);
wherein said opening (12) exhibits a main direction of extension (X) along which also said main body (11) extends, and wherein said finned portions (13) are such as to extend laterally with respect to said main body (11) along a transverse direction (T) or a parallel direction (P) relative to said main direction of extension (X) of said opening (12), said main body (11) lying in a respective lying plane (B) and said finned portions lying in a respective lying plane (W), said lying plane (B) of the main body (11) and said lying plane (W) of the finned portions (13) being offset from one another and arranged at a distance **characterised in that** the anchoring system further comprises:
- a platform (20) installable on a loading surface (110) of a transport vehicle (100) having a predetermined corrugated profile that comprises a sheet-like element (21) exhibiting a plurality of holes (22) such as to put in communication a side (21a) with an opposite side (21b) of said sheet-like element (21); wherein said holes (22) are arranged in sequence at a recessed portion (110a) of said corrugated profile and wherein said platform (20) is resting on said loading surface (110) at a raised portion (110b) of said corrugated profile in a configuration of the platform (20) installed on said loading surface (110) of said transport vehicle (100), said holes (22) being obtained with said sheet-like element (21) being straight cut from said side (21a) up to said opposite side (21b) along a direction perpendicular to said sheet-like element (21),
wherein said anchoring devices (10) are reversibly fixed on said side (21a) of said sheet-like element (21) via respective finned portions (13) and wherein said anchoring devices (10) are such as to emerge from said holes (22) of the platform (20) with a respective flat surface (14) at said opposite side (21b) of the sheet-like element (21) of the platform (20), wherein a thickness (S) of said finned portions (13) of the anchoring devices (10) is less than a minimum distance between a recessed portion (110a) and a raised portion (110b) of a corrugated profile of said loading surface (110).

2. The system (30) in accordance with claim 1, wherein said anchoring devices (10) have respective finned portions (13) aligned along parallel directions (H) in which the holes (22) are arranged in such a manner that the main body (11) and the finned portions (13) are completely and simultaneously contained within the same recessed portion (110a) of said corrugated profile of the loading surface (110) in a configuration of the platform (20) installed on the loading surface (110) of a transport vehicle (100).

3. The system (30) in accordance with claim 1, wherein said anchoring devices (10) have respective finned portions (13) arranged transversely with respect to said parallel directions (H) in which said holes (22) are arranged in such a manner that the main body (11) is arranged at a raised portion (110b) of said corrugated profile and at the same time the finned portions (13) of said anchoring device (10) are arranged at respective recessed portions (110a) of the corrugated profile that are adjacent to said raised portion (110b) in a configuration of the platform (20) installed on the loading surface (110) of a transport vehicle (100).

4. The system (30) in accordance with claim 3, wherein said anchoring devices (10) exhibit respective finned portions (13) arranged perpendicularly with respect to said parallel directions (H) in which said holes (22) are arranged in such a manner that the main body (11) is arranged at a raised portion (110b) of said corrugated profile and the finned portions (13) of said anchoring device (10) are arranged at respective recessed portions (110a) of the corrugated profile that are adjacent to said raised portion (110b), preferably said main direction of extension (X) of said opening (12) being parallel to said parallel directions (H) in which the holes (22) are arranged.

5. The system (30) in accordance with one or more of the preceding claims, wherein said parallel direction (P) of extension of the finned portions (13) coincides with said main direction of extension (X) of the opening (12).

6. The system (30) in accordance with one or more of the preceding claims, wherein said transverse direction (T) of extension of said finned portions (13) is arranged perpendicularly to said main direction of extension (X) of said opening (12) and said finned portions (13) are arranged respectively on opposite sides of the main body (11) relative to the main direction of extension (X), preferably said finned portions (13) being arranged at a median point of said opening (12).

7. The system (30) in accordance with one or more of the preceding claims, wherein said preset distance (d) between the lying plane (B) of the main body (11) and the lying plane (W) of the finned portions (13) has a value between approximately 2 and approximately 18 mm, preferably said preset distance (d) having a value between approximately 6 and approximately 18 mm.

8. The system (30) in accordance with one or more of the preceding claims, wherein said finned portions (13) have a width less than or equal to that of a side edge of the main body (11) wherefrom the finned portions (13) extend.

9. The system (30) in accordance with one or more of the preceding claims, wherein said holes (22) are arranged in sequence along mutually parallel directions (H) corresponding to respective recessed portions (110a) of a corrugated profile of said loading surface (110), preferably said holes (22) having a shape such as to allow an anchoring device (10) to be housed such that at least said flat surface (14) is flush with said opposite side (21b) of the sheet-like element (21).

10. The system (30) in accordance with one or more of the preceding claims, wherein said holes (22) are arranged at fixed hooking points provided on a loading surface (110) of a transport vehicle (100) and allow use of a hook or anchoring ring (200).

11. The system (30) in accordance with one or more of the preceding claims from 1 to 8, wherein said holes (22) do not exhibit any slots and/or narrowing in shape, preferably said holes (22) do not exhibit any bottom planes or abutment edges for the anchoring devices (10).

## Patentansprüche

1. Verankerungssystem (30) für Transportfahrzeuge (100), umfassend:
- eine Vielzahl an Verankerungsvorrichtungen (10) für Transportfahrzeuge (100), umfassend:
- einen Hauptkörper (11), der mindestens eine Öffnung (12) aufweist, durch die ein Haken oder Verankerungsring (200) assoziiert werden können, der an einem auf einem Fahrzeug (100) zu transportierenden Gegenstand befestigbar ist;
- mindestens zwei gerippte Abschnitte (13), die fest mit dem Hauptkörper (11) verbunden und konfiguriert sind, um die Verankerungsvorrichtung (10) an einer Struktur eines Transportfahrzeugs (100) und/oder einer Oberfläche (110) eines Transportfahrzeugs (100) befestigbar zu machen;
wobei die Öffnung (12) eine Haupterstreckungsrichtung (X) aufweist, entlang derer sich auch der Hauptkörper (11) erstreckt, und wobei die gerippten Abschnitte (13) derart sind, dass sie sich seitlich in Bezug auf den Hauptkörper (11) entlang einer Querrichtung (T) oder einer Parallelrichtung (P) relativ zu der Haupterstreckungsrichtung (X) der Öffnung (12) erstrecken, wobei der Hauptkörper (11) in einer entsprechenden Liegeebene (B) liegt und die gerippten Abschnitte in einer entsprechenden Liegeebene (W) liegen, wobei die Liegeebene (B) des Hauptkörpers (11) und die Liegeebene (W) der gerippten Abschnitte (13) zueinander versetzt und in einem Abstand angeordnet sind,
**dadurch gekennzeichnet, dass** das Verankerungssystem zudem umfasst:
- eine Plattform (20), die auf einer Ladefläche (110) eines Transportfahrzeugs (100) installierbar ist, aufweisend ein vorbestimmtes gewelltes Profil, das ein plattenartiges Element (21) umfasst, das eine Vielzahl an Löchern (22) aufweist, sodass eine Seite (21a) mit einer gegenüberliegenden Seite (21b) des plattenartigen Elements (21) in Kommunikation gesetzt wird, wobei die Löcher (22) der Reihe nach in einem vertieften Abschnitt (110a) des gewellten Profils angeordnet sind und wobei die Plattform (20) auf der Ladefläche (110) an einem erhöhten Abschnitt (110b) des gewellten Profils in einer Konfiguration mit der Plattform (20) installiert auf der Ladefläche (110) des Transportfahrzeugs (100) aufliegt, wobei die Löcher (22) erhalten werden, indem das plattenartige Element (21) von der Seite (21a) bis zur gegenüberliegenden Seite (21b) entlang einer Richtung senkrecht zu dem plattenartigen Element (21) gerade geschnitten wird,
wobei die Verankerungsvorrichtungen (10) auf der Seite (21a) des plattenartigen Elements (21) über entsprechende gerippte Abschnitte (13) reversibel befestigt sind und wobei die Verankerungsvorrichtungen (10) so beschaffen sind, dass sie aus den Löchern (22) der Plattform (20) mit einer entsprechenden ebenen Fläche (14) an der gegenüberliegenden Seite (21b) des plattenartigen Elements (21) der Plattform (20) heraustreten, wobei eine Dicke (S) der gerippten Abschnitte (13) der Verankerungsvorrichtungen (10) kleiner als ein Mindestabstand zwischen einem vertieften Abschnitt (110a) und einem erhöhten Abschnitt (110b) eines gewellten Profils der Ladefläche (110) ist.

2. System (30) nach Anspruch 1, wobei die Verankerungsvorrichtungen (10) entsprechende gerippte Abschnitte (13) aufweisen, die entlang Parallelrichtungen (H) ausgerichtet sind, in denen die Löcher (22) derart angeordnet sind, dass der Hauptkörper (11) und die gerippten Abschnitte (13) vollständig und gleichzeitig in demselben vertieften Abschnitt (110a) des gewellten Profils der Ladefläche (110) in einer Konfiguration mit der Plattform (20) installiert auf der Ladefläche (110) eines Transportfahrzeugs (100) enthalten sind.

3. System (30) nach Anspruch 1, wobei die Verankerungsvorrichtungen (10) entsprechende gerippte Abschnitte (13) aufweisen, die quer zu den Parallelrichtungen (H) angeordnet sind, in denen die Löcher (22) derart angeordnet sind, dass der Hauptkörper (11) an einem erhöhten Abschnitt (110b) des gewellten Profils angeordnet und gleichzeitig die gerippten Abschnitte (13) der Verankerungsvorrichtung (10) an entsprechenden vertieften Abschnitten (110a) des gewellten Profils angeordnet sind, die in einer Konfiguration mit der Plattform (20) installiert auf der Ladefläche (110) eines Transportfahrzeugs (100) an den erhöhten Abschnitt (110b) angrenzen.

4. System (30) nach Anspruch 3, wobei die Verankerungsvorrichtungen (10) entsprechende gerippte Abschnitte (13) aufweisen, die senkrecht zu den Parallelrichtungen (H) angeordnet sind, in denen die Löcher (22) derart angeordnet sind, dass der Hauptkörper (11) an einem erhöhten Abschnitt (110b) des gewellten Profils angeordnet und die gerippten Abschnitte (13) der Verankerungsvorrichtung (10) an entsprechenden vertieften Abschnitten (110a) des gewellten Profils angeordnet sind, die an den erhöhten Abschnitt (110b) angrenzen, vorzugsweise die Haupterstreckungsrichtung (X) der Öffnung (12) parallel zu den Parallelrichtungen (H), in denen die Löcher (22) angeordnet sind, ist.

5. System (30) nach einem oder mehreren der vorhergehenden Ansprüche, wobei die Parallelerstreckungsrichtung (P) der gerippten Abschnitte (13) mit der Haupterstreckungsrichtung (X) der Öffnung (12) zusammenfällt.

6. System (30) nach einem oder mehreren der vorhergehenden Ansprüche, wobei die Quererstreckungsrichtung (T) der gerippten Abschnitte (13) senkrecht zu der Haupterstreckungsrichtung (X) der Öffnung (12) angeordnet ist und die gerippten Abschnitte (13) jeweils an gegenüberliegenden Seiten des Hauptkörpers (11) relativ zur Haupterstreckungsrichtung (X) angeordnet sind, wobei die gerippten Abschnitte (13) vorzugsweise an einem Mittelpunkt der Öffnung (12) angeordnet sind.

7. System (30) nach einem oder mehreren der vorhergehenden Ansprüche, wobei der voreingestellte Abstand (d) zwischen der Liegeebene (B) des Hauptkörpers (11) und der Liegeebene (W) der gerippten Abschnitte (13) einen Wert zwischen ungefähr 2 und ungefähr 18 mm aufweist, wobei der voreingestellte Abstand (d) vorzugsweise einen Wert zwischen ungefähr 6 und ungefähr 18 mm aufweist.

8. System (30) nach einem oder mehreren der vorhergehenden Ansprüche, wobei die gerippten Abschnitte (13) eine Breite aufweisen, die kleiner als oder gleich wie die einer Seitenkante des Hauptkörpers (11) ist, von der sich die gerippten Abschnitte (13) erstrecken.

9. System (30) nach einem oder mehreren der vorhergehenden Ansprüche, wobei die Löcher (22) der Reihe nach entlang zueinander paralleler Richtungen (H) angeordnet sind, die entsprechenden vertieften Abschnitten (110a) eines gewellten Profils der Ladefläche (110) entsprechen, wobei die Löcher (22) vorzugsweise eine Form aufweisen, die ermöglicht, dass eine Verankerungsvorrichtung (10) untergebracht wird, so dass mindestens die ebene Fläche (14) mit der gegenüberliegenden Seite (21b) des plattenartigen Elements (21) bündig ist.

10. System (30) nach einem oder mehreren der vorhergehenden Ansprüche, wobei die Löcher (22) an festen Hakenpunkten angeordnet sind, die auf einer Ladefläche (110) eines Transportfahrzeugs (100) vorgesehen sind und die Verwendung eines Hakens oder Verankerungsrings (200) ermöglichen.

11. System (30) nach einem oder mehreren der vorhergehenden Ansprüche 1 bis 8, wobei die Löcher (22) keine Schlitze und/oder Verengungen in der Form aufweisen, vorzugsweise weisen die Löcher (22) keine Bodenebenen oder Anschlagkanten für die Verankerungsvorrichtungen (10) auf.

## Revendications

1. Système d'ancrage (30) pour véhicules de transport (100), comprenant :
- une pluralité de dispositifs d'ancrage (10) pour véhicules de transport (100) comprenant :
- un corps principal (11) présentant au moins une ouverture (12) à travers laquelle un crochet ou anneau d'ancrage (200) peut être associé et fixé à un objet à transporter sur un véhicule (100) ;
- au moins deux parties à ailettes (13) solidaires dudit corps principal (11) et configurées pour permettre au dispositif d'ancrage (10) de se fixer à une structure d'un véhicule de transport (100) et/ou à une surface (110) d'un véhicule de transport (100) ;
dans lequel ladite ouverture (12) présente une direction principale d'extension (X) le long de laquelle se prolonge aussi ledit corps principal (11), et dans lequel lesdites parties à ailettes (13) sont telles qu'elles se prolongent latéralement par rapport au dit corps principal (11) le long d'une direction transversale (T) ou d'une direction parallèle (P) par rapport à ladite direction principale d'extension (X) de ladite ouverture (12), ledit corps principal (11) reposant dans un plan d'appui (B) respectif et lesdites parties à ailettes reposant dans un plan d'appui (W) respectif, ledit plan d'appui (B) du corps principal (11) et ledit plan d'appui (W) des parties à ailettes (13) étant décalés l'un par rapport à l'autre et disposés à une certaine distance, **caractérisé en ce que** le système d'ancrage comprend de plus :
- une plate-forme (20) pouvant être installée sur une surface de chargement (110) d'un véhicule de transport (100) ayant un profil ondulé prédéterminé qui comprend un élément (21) en forme de feuille présentant une pluralité d'orifices (22) de manière à mettre en communication un côté (21a) avec un côté opposé (21b) dudit élément (21) en forme de feuille ; dans lequel lesdits orifices (22) sont disposés en séquence en correspondance d'une partie renfoncée (110a) dudit profil ondulé et dans lequel ladite plate-forme (20) repose sur ladite surface de chargement (110) en correspondance d'une partie relevée (110b) dudit profil ondulé dans une configuration de la plate-forme (20) installée sur ladite surface de chargement (110) dudit véhicule de transport (100), lesdits orifices (22) étant obtenus avec ledit élément (21) en forme de feuille étant coupé droit à partir dudit côté (21a) jusqu'au dit côté opposé (21b) le long d'une direction perpendiculaire au dit élément (21) en forme de feuille,
dans lequel lesdits dispositifs d'ancrage (10) sont fixés de façon réversible sur ledit côté (21a) dudit élément (21) en forme de feuille via des parties à ailettes (13) respectives et dans lequel lesdits dispositifs d'ancrage (10) sont tels qu'ils émergent desdits orifices (22) de la plate-forme (20) avec une surface plate (14) respective en correspondance dudit côté opposé (21b) de l'élément (21) en forme de feuille de la plate-forme (20), dans lequel une épaisseur (S) desdites parties à ailettes (13) des dispositifs d'ancrage (10) est inférieure à une distance minimum entre une partie renfoncée (110a) et une partie relevée (110b) d'un profil ondulé de ladite surface de chargement (110).

2. Système (30) selon la revendication 1, dans lequel lesdits dispositifs d'ancrage (10) comportent des parties à ailettes (13) respectives alignées le long de directions parallèles (H) dans lesquelles les orifices (22) sont disposés de manière à ce que le corps principal (11) et les parties à ailettes (13) soient complètement et simultanément contenus à l'intérieur de la même partie renfoncée (110a) dudit profil ondulé de la surface de chargement (110) dans une configuration de la plate-forme (20) installée sur la surface de chargement (110) d'un véhicule de transport (100).

3. Système (30) selon la revendication 1, dans lequel lesdits dispositifs d'ancrage (10) comportent des parties à ailettes (13) respectives disposées transversalement par rapport auxdites directions parallèles (H) dans lesquelles lesdits orifices (22) sont disposés de manière à ce que le corps principal (11) soit disposé en correspondance d'une partie relevée (110b) dudit profil ondulé et en même temps les parties à ailettes (13) dudit dispositif d'ancrage (10) sont disposées en correspondance des parties renfoncées (110a) respectives du profil ondulé étant adjacentes à ladite partie relevée (110b) dans une configuration de la plate-forme (20) installée sur la surface de chargement (110) d'un véhicule de transport (100).

4. Système (30) selon la revendication 3, dans lequel lesdits dispositifs d'ancrage (10) présentent des parties à ailettes (13) respectives disposées perpendiculairement par rapport auxdites directions parallèles (H) dans lesquelles lesdits orifices (22) sont disposés de manière à ce que le corps principal (11) soit disposé en correspondance d'une partie relevée (110b) dudit profil ondulé et les parties à ailettes (13) dudit dispositif d'ancrage (10) sont disposées en correspondance des parties renfoncées (110a) respectives du profil ondulé étant adjacentes à ladite partie relevée (110b), de préférence ladite direction principale d'extension (X) de ladite ouverture (12) étant parallèle auxdites directions parallèles (H) dans lesquelles sont disposés les orifices (22).

5. Système (30) selon l'une ou plusieurs des revendications précédentes, dans lequel ladite direction parallèle (P) d'extension des parties à ailettes (13) coïncide avec ladite direction principale d'extension (X) de l'ouverture (12).

6. Système (30) selon l'une ou plusieurs des revendications précédentes, dans lequel ladite direction transversale (T) d'extension desdites parties à ailettes (13) est disposée perpendiculairement à ladite direction principale d'extension (X) de ladite ouverture (12) et lesdites parties à ailettes (13) sont disposées respectivement sur des côtés opposés du corps principal (11) par rapport à la direction principale d'extension (X), de préférence lesdites parties à ailettes (13) étant disposées en correspondance d'un point médian de ladite ouverture (12).

7. Système (30) selon l'une ou plusieurs des revendications précédentes, dans lequel ladite distance (d), préétablie entre le plan d'appui (B) du corps principal (11) et le plan d'appui (W) des parties à ailettes (13), a une valeur approximative comprise entre 2 et environ 18 mm, de préférence ladite distance (d) préétablie a une valeur approximative comprise entre 6 et environ 18 mm.

8. Système (30) selon l'une ou plusieurs des revendications précédentes, dans lequel lesdites parties à ailettes (13) ont une largeur inférieure ou égale à celle d'un bord latéral du corps principal (11) d'où se prolongent les parties à ailettes (13).

9. Système (30) selon l'une ou plusieurs des revendications précédentes, dans lequel lesdits orifices (22) sont disposés en séquence le long de directions (H) mutuellement parallèles correspondant à des parties renfoncées (110a) respectives d'un profil ondulé de ladite surface de chargement (110), de préférence lesdits orifices (22) ayant une forme permettant au dispositif d'ancrage (10) d'être logé de manière à ce qu'au moins ladite surface plate (14) soit alignée au dit côté opposé (21b) de l'élément (21) en forme de feuille.

10. Système (30) selon l'une ou plusieurs des revendications précédentes, dans lequel lesdits orifices (22) sont disposés en correspondance de points d'accrochage fixes prévus sur une surface de chargement (110) d'un véhicule de transport (100) et permettent l'utilisation d'un crochet ou anneau d'ancrage (200).

11. Système (30) selon l'une ou plusieurs des revendications précédentes de 1 à 8, dans lequel lesdits orifices (22) n'ont pas la forme de fentes et/ou de rétrécissements, de préférence lesdits orifices (22) ne présentent pas de plans de fond ou de bords de butée pour les dispositifs d'ancrage (10).
